# EUROPEAN PATENT SPECIFICATION

(11) **EP 3 252 911 B1**
(45) Date of publication and mention of the grant of the patent: **27.10.2021**
(21) Application number: 15856173.8
(22) Date of filing: 06.07.2015
(51) Int. Cl.: H02J 7/00, G04G 19/00, H02J 7/34

(54) **WEARABLE MOBILE POWER SUPPLY AND POWER SUPPLY CONTROL METHOD THEREOF**
AM KÖRPER TRAGBARE, MOBILE STROMVERSORGUNG UND STROMVERSORGUNGSSTEUERUNGSVERFAHREN DAFÜR
ALIMENTATION ÉLECTRIQUE MOBILE VESTIMENTAIRE ET PROCÉDÉ DE COMMANDE D'ALIMENTATION ÉLECTRIQUE ASSOCIÉ

(30) Priority: 28.01.2015 CN 201510044159
(43) Date of publication of application: 06.12.2017
(73) Proprietor: JRD Communication Inc., Shenzhen, Guangdong 518057 (CN)
(72) Inventor: HUANG, Yanfeng, Shenzhen Guangdong 518057 (CN); ZHOU, Libin, Shenzhen Guangdong 518057 (CN); LI, Zhihua, Shenzhen Guangdong 518057 (CN); DING, Peng, Shenzhen Guangdong 518057 (CN); TAO, Zhihua, Shenzhen Guangdong 518057 (CN)
(74) Representative: ZHAOffice SPRL
(86) International application number: PCT/CN2015/083365
(87) International publication number: WO 2016/119403

(56) References cited:
- WO-A1-2014/110890
- CN-A- 104 241 577
- CN-A- 104 734 281
- CN-U- 203 522 269
- CN-U- 203 951 209
- CN-U- 204 068 365
- US-A1- 2004 178 770
- US-A1- 2012 194 976
- US-A1- 2012 203 178
- US-A1- 2014 191 724

## Description

### FIELD OF THE DISCLOSURE

The present disclosure relates to power supplies, and more particularly, to a wearable power supply and an associated power supply method.

### BACKGROUND OF THE DISCLOURE

As the continuous enrichment of functionalities of mobile devices, the usage of mobile devices is gradually increasing, and the power consumption is inevitably rising. For example, a smart watch with a 200mA to 400mA built-in battery cannot meet the common daily use. If, however, equipped with a battery of larger capacity, the smart watch may result in an increased size and may also add to its cost, which is not conducive to the marketing.

Typically, mobile devices, such as a smart watch, can be charged by a mobile power supply, but the existing mobile power supplies are generally of a large size, and cannot display the remaining capacity of the mobile power supply, which adds to the complexity of usage.

US2014191724A1 discloses a protective case for an electronic device. The protective case includes an interface for connecting to a rechargeable battery, a group of display elements, a device interface for electrically interfacing with the electronic device, and an external interface. The protective case also includes electrical circuitry configured to receive electrical power from an external power source through the external interface, exchange communications with the electronic device through the device interface, determined a charge rate for the rechargeable battery of the electronic device based on information received in the communications, and supply a portion of the received electrical power to the electronic device through the device interface if a condition is satisfied.

US2004178770A1 discloses a back-up power system having a monitoring system for determining, and for allowing remote monitoring of, a back-up time can be provided by a plurality of batteries for a given application at all times. The back-up power system includes a plurality of batteries, each having an integrated circuit adapted to monitor individual battery's state of health. The back-up power system also includes a data management unit for evaluating the back-up time available from the plurality of batteries based on a sum of individual battery available capacity, a measured ambient temperature and a continuously updated measured application current load. The available back-up time and the measured application current load are accessible to a remote user via a communication link.

WO2014110890A1 discloses a mobile power supply including a charging circuit arranged in a casing, and an input/output interface which is electrically connected with the charging circuit and is led out from the casing through a wire. An adsorption device is provided on the casing and is detachably adsorbed to charged equipment. The adsorption device comprises a first magnet disposed at the bottom of the casing and a first iron sheet detachably mounted on the charged equipment.

US2012194976A1 discloses a wrist-worn electronic device and methods therefor. The electronic wristband can provide additional electrical circuitry or devices that can be made available for use as or with an electronic device. The electronic device can be a mobile electronic device that can be removably coupled to the electronic wristband which provides the additional circuitry or devices. The electronic device can utilize the additional electrical circuitry or devices provided within the electronic wristband to augment the capabilities of the electronic device. The electronic device can be integrally formed with the electronic wristband which provides the additional circuitry or devices.

### SUMMARY OF THE DISCLOSURE

A principal problem to be addressed by the disclosure is to provide a wearable power supply for a smart watch and an associated power supply method. The wearable power supply features portability and convenience that it can display its remaining capacity on a display of a charged device in real time.

To achieve the above objectives, one technical solution adopted by the disclosure is to provide a wearable power supply, which includes a control module, a battery; and a first charge module, a second charge module, a communication module, and a remaining capacity computation module, which are connected to the control module.

The first charge module includes a driver and a first interface. The driver is connected to the control module, the first interface, and the battery, respectively. The first interface is configured to connect to an external energy source, which can charge the battery through the first interface.

The second charge module includes a voltage boost driver and a second interface. The voltage boost driver is connected to the control module, the battery, and the second interface, respectively. The second interface is configured to electrically connect to a terminal through contact pins in order to charge the terminal. The voltage boost driver boosts an output voltage of the battery to a required rated voltage of the terminal.

The remaining capacity computation module is configured to adjust the remaining capacity value of the battery in real time according to a discharging curve of the battery.

The communication module is configured to connect to the terminal through the contact pins and send the adjusted remaining capacity value outputted from the remaining capacity computation module to the terminal, which thus displays the remaining capacity value of the battery.

The second interface may be a USB interface including 5 metal contact pins.

The remaining capacity computation module may be configured to collect an instantaneous discharge current of the battery, search, in the battery discharging curve stored in the wearable power supply, for the corresponding remaining capacity value of the discharge current, and adjust the remaining capacity value of the battery based on the searched remaining capacity value.

The wearable power supply may further include multiple LED (light-emitting diode) power indication lights connected to the control module. The LED power indication lights may be lit up when the battery is charging the terminal or the external energy source is charging the battery.

The wearable power supply may further include a button selector switch connected to the control module. The button selector switch may be used to control the charge and discharge of the battery.

The wearable power supply includes a magnet, and is fixed onto the terminal by the attraction of the magnet and an enclosure of the terminal.

The wearable power supply is of a cylindrical shape, and a height of the wearable power supply is smaller than 1 mm.

The first interface may be a micro universal serial bus (Micro USB).

The terminal is a smart watch.

To achieve the above objectives, another technical solution adopted by the disclosure is to provide a power supply method of a wearable power supply. The power supply method includes:

boosting an output voltage of a battery of the wearable power supply to a required rated voltage of a terminal electrically connected to the wearable power supply, and charging the terminal via an interface connecting the wearable power supply and the terminal;

adjusting the remaining capacity value of the battery in real time based on a battery discharging curve when the battery is charging the terminal;

sending the adjusted remaining capacity value to the terminal, and displaying by the terminal the adjusted remaining capacity value of the battery.

Advantages of the disclosure may follow: distinguished from the prior art, the disclosure provides a wearable power supply including a first charge module used to charge the wearable power supply, and a second charge module used to charge a terminal electrically connected to the wearable power supply, thus the second charge module electrically connects to the terminal via contact pins, through which the terminal can be charged directly without the need of a data cable, thus reducing the overall size of the wearable power supply, and also adding to the convenience and simplicity of usage of the wearable power supply. In addition, the wearable power supply further includes a remaining capacity computation module configured to adjust the remaining capacity value of the battery based on the battery discharging curve, and a communication module configured to transmit the remaining capacity value of the battery to the terminal, thus the terminal can display the accurate and realtime remaining capacity value of the wearable power supply for the user's reference, which adds to the user experience and further improves the precision of the remaining battery capacity value displayed.

### BRIEF DESCRIPTION OF THE DRAWINGS

FIG. 1 is a perspective view of a wearable power supply according to an embodiment of the disclosure.
FIG. 2 is a block diagram of a wearable power supply according to an embodiment of the disclosure.
FIG. 3 is a block diagram of a wearable power supply according to another embodiment of the disclosure.
FIG. 4 is a block diagram of a wearable power supply according to yet another embodiment of the disclosure.
FIG. 5 is a flow chart illustrating a power supply method of a wearable power supply according to an embodiment of the disclosure.

### DETAILED DESCRIPTION OF THE DISCLOSURE

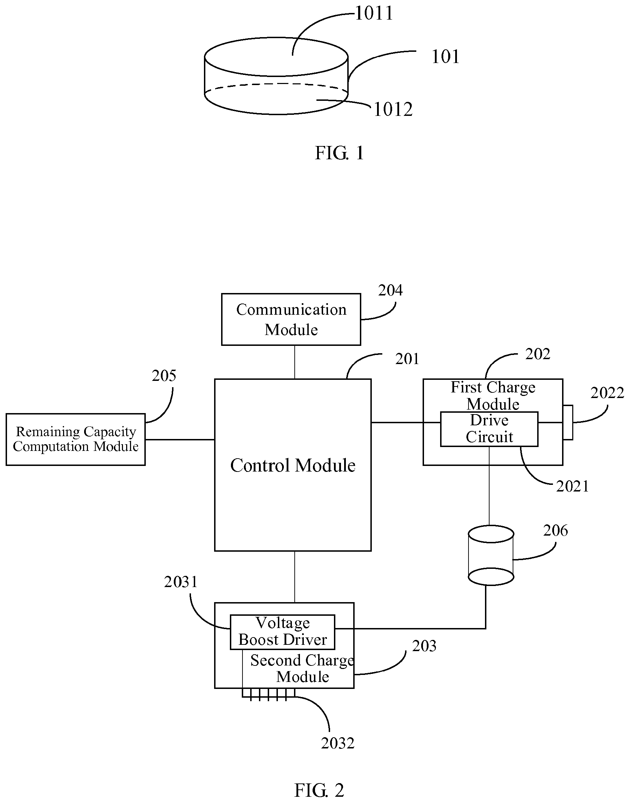

Referring to FIG. 1, there is shown a perspective view of a wearable power supply for a smart watch according to an embodiment of the disclosure.

The wearable power supply 101 is of a cylindrical shape and includes a top surface 1011 and a bottom surface 1012, and, for portability, a thickness (or height measured from the top surface 1011 to the bottom surface 1012) of the wearable power supply 101 is smaller than 1mm. An enclosure of the wearable power supply 101 may be of a heat-resistant and heat conductive metal.

In other embodiments, a cross section of the wearable power supply 101 can also be of other shapes, such as a square, etc.

The wearable power supply 101 includes a magnet, and is fixed onto the terminal, which is to be charged, by the attraction between the magnet and the metal enclosure of the terminal. The terminal may as well include a mobile phone, or any other mobile devices. In other embodiments, the wearable power supply 101 may be fixed onto the terminal by other manners.

Referring now to FIG. 2, there is shown a block diagram of a wearable power supply according to an embodiment of the disclosure. The wearable power supply includes a control module 201, a battery 206; and a first charge module 202 and a second charge module 203, which are connected to the control module 201.

The first charge module 202 may be located at a side wall of the wearable power supply, and is used to charge the wearable power supply using an external energy source. The second charge module 203 is used to charge a terminal that is connected to the wearable power supply.

To avoid over-charge or over-discharge of the battery 206, the battery 206 of this embodiment is implemented as a battery containing lithium polymer cells. In addition, the battery 206 can also be other batteries enabled with over-charge or over-discharge protection.

The first charge module 202 includes a driver 2021 and a first interface 2022. The driver 2021 is connected to the control module 201. The driver 2021 is further connected to the first interface 2022 and the battery 206, respectively. The first charge module 202 may drive the first interface 2022 via the driver 2021, thus the battery 106 can be charged by an external energy source connected to the first interface 2022.

Optionally, to further reduce the size of the wearable power supply, the first interface 2022 can be implemented as a micro universal serial bus (USB). In some embodiments, however, the first interface 2022 can also be implemented as other interfaces, such as a mini USB interface.

The second charge module 203 includes a voltage boost driver 2031 and a second interface 2032. The voltage boost driver 2031 is connected to the control module 201, and is connected to the second interface 2032 and the battery 206, respectively. The voltage boost driver 2031 steps up a voltage outputted from the battery 206, when the second interface 2032 is electrically connected to a terminal. The output voltage of the battery is boosted to a required rated voltage of the terminal, so as to ensure charge safety and proper charge voltage of the terminal. For example, suppose the rated voltage of the terminal electrically connected to the wearable power supply is 5 volts (V), then the voltage boost driver 2031 may elevate the output voltage from the battery 206 to 5V under the control of the control module 201, and then output the voltage of 5V to the second interface 2032 and thus charge the terminal.

The second interface 2032 is a 5Pin USB interface including 5 metal contact pins. Of the 5 metal contact pins, two may either be a signal line contact pin, another two may either be a data line contact pin, and the last an ID pin. The 5Pin USB interface may not only add to the simplicity, but effectively reduce the overall size of the wearable power supply. Furthermore, the terminal can be charged directly eliminating the need of a data cable, which thus adds to the convenience and portability and also saves the used space and cost.

According to a specific embodiment, when the wearable power supply is in a charged state and the first interface 2022 is in an electrical connection with an external energy source, the driver 2021 may drive the first charge module 202 under the control of the control module 201, to charge the battery 206 through the first interface 2022. When the charging of the battery 206 is completed, the first interface 2022 will be disconnected from the external energy source.

When the wearable power supply is charging a smart watch, the wearable power supply is attached onto the terminal via the attraction of a magnet built in the wearable power supply and the enclosure of the terminal. Thus, the wearable power supply is fixed onto the back of the smart watch, which thus form a whole. Typically, the area of the cross section of the wearable power supply is not greater than the area of the dial of the smart watch. If the control module 201 of the wearable power supply detects that the 5 metal contact pins are each in an electrical connection with a corresponding contact of the smart watch, the wearable power supply will boost the voltage outputted from the battery 206 to the required rated voltage of the smart watch, for example, 5V, and thus automatically charge the smart watch via the second interface 2032.

Furthermore, to facilitate the user to know the current remaining capacity of the wearable power supply, a communication module 204 is further included, as shown in FIG. 2. The communication module 204 is configured to connect to the terminal via electrical contact connections to send the current remaining capacity value of the wearable power supply to the terminal, which thus displays the remaining capacity value of the wearable power supply.

For example, when the 5 metal contact pins of the wearable power supply are each in an electrical connection with a corresponding contact pin of a smart watch, and the communication module 204 are also electrically connected to the communication contact pins of the smart watch, then the communication module 204 will send a percentage representing the remaining capacity of the battery 206 of the wearable power supply to the smart watch in real time, thus the user can acquire the remaining battery capacity of the wearable power supply by the percentage displayed on the dial of the smart watch.

According to another embodiment, when the remaining capacity of the battery 206 of the wearable power supply is lower than a predetermined value, the terminal that is electrically connected to the wearable power supply can issue an alert, to notify the user of the current low battery status of the wearable power supply.

Though the communication module 204 can send the real time percentage representing the remaining capacity of the battery to the terminal, such as a smart watch, deviations would inevitably occur during the discharge process of the battery 206 due to circuit design or manufacture, resulting in an inaccurate detection precision. In addition, when the wearable power supply itself detects the remaining capacity, the detection precision would also be affected.

To address the above issue, the wearable power supply further includes a remaining capacity computation module 205, as shown in FIG. 2. The remaining capacity computation module 205 adjusts the remaining capacity value of the battery in real time according to a battery discharging curve.

Specifically, the remaining capacity computation module 205 may first control the initialization of a coulometer to measure the instantaneous discharge current, which is then passed through an analog-to-digital converter (ADC) to be converted to a corresponding voltage, which is then searched in the battery discharging curve for a corresponding energy consumption value. The energy consumption value acquired at each measurement-conversion-search process will be cumulated to determine the total energy consumption in the battery up to the current moment, and the percentage indicating the remaining battery capacity would be adjusted synchronously in accordance with the total energy consumption calculated.

In the current embodiment, the detection period of the discharge current by the remaining capacity computation module 205 is 1 minute. To further enhance the displayed precision to enable the displayed remaining capacity to change more smoothly, the detection period can also be shortened, for example, the discharge current can be detected every half a minute. However, the detection action will also consume the battery's energy, thus, for consideration of saving the battery's power, the detection period shouldn't be infinitely shortened.

The communication module 204 then sends the adjusted remaining capacity value to the smart watch, which displays the adjusted remaining capacity value on its display, such as a dial of the smart watch.

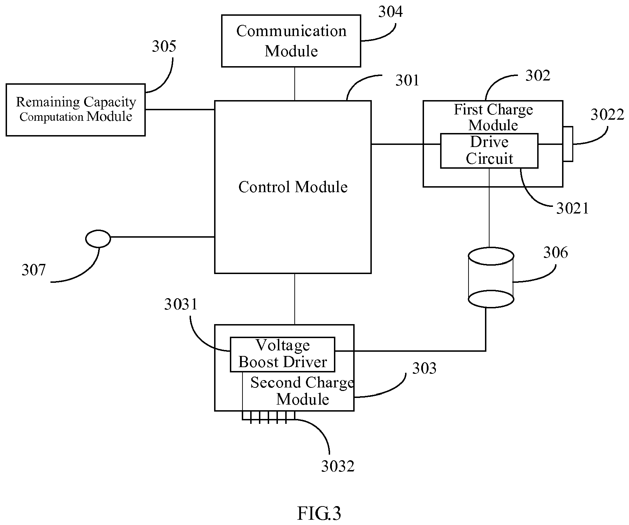

To notify the user of the current charge or discharge state of the wearable power supply, referring now to FIG. 3, there is shown a block diagram of a wearable power supply according to another embodiment of the disclosure. The wearable power supply is different from the above embodiment in that, it further includes multiple LED (light-emitting diode) power indication lights 307. The LED power indication lights 307 may be connected to the control module 301, and may be lit up when the battery 306 is charging a terminal electrically connected to the wearable power supply or when an external energy source is charging the battery 306. The LED power indication lights 307 can thus notify the user of the current charge or discharge state of the wearable power supply.

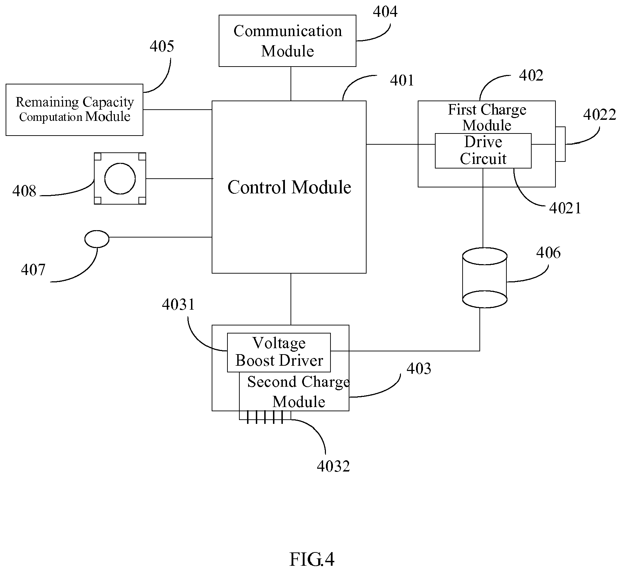

To render more flexible charge and/or discharge control over the wearable power supply, referring now to FIG. 4, there is shown a block diagram of a wearable power supply according to yet another embodiment of the disclosure. The wearable power supply differs from the above embodiment in that, it further includes a button selector switch 408, which is connected to the control module 401 and configured to control the charge and discharge of the battery.

Distinguished from the prior art, the wearable power supply according to the invention includes a first charge module used to charge the wearable power supply, and a second charge module used to charge a terminal electrically connected to the wearable power supply, where the second charge module electrically connects to the terminal via contact pins, through which the terminal can be charged directly without the need of a data cable, thus reducing the overall size of the wearable power supply and adding to the convenience and simplicity of usage of the wearable power supply. In addition, the wearable power supply further includes a remaining capacity computation module configured to adjust the remaining battery capacity value based on the battery discharging curve, and a communication module configured to send the remaining battery capacity value to the terminal to display. Thus, the terminal can display the realtime and accurate remaining capacity of the wearable power supply for the user's reference.

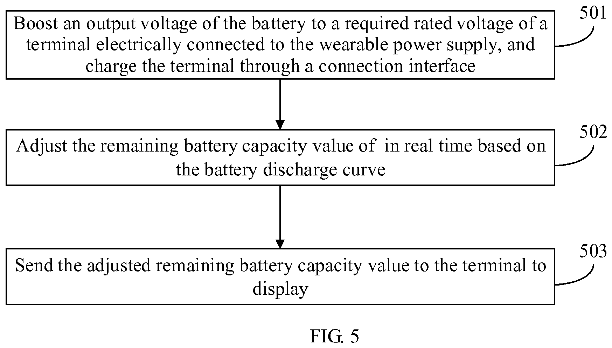

Referring now to FIG. 5, there is show a flow chart illustrating a power supply method of a wearable power supply. The power supply method includes the following steps.

In a first step 501, an output voltage of a battery of the wearable power supply is boosted to a required rated voltage of a terminal electrically connected to the wearable power supply, thus the terminal can be charged via a connection interface connecting the wearable power supply and the terminal.

To ensure the charge safety and a proper power supply to the terminal, when the wearable power supply is charging the terminal, the output voltage of the wearable power supply would be stepped up to the required rated voltage of the terminal, which thus can be charged through the connection interface.

For example, suppose the rated voltage of the terminal electrically connected to the wearable power supply is 5 volts (V), then the voltage boost driver 2031 may elevate the output voltage from the battery 206 to 5V under the control of the control module 201, and then output the voltage of 5V to the second interface 2032 and thus charge the terminal.

To facilitate the user to know the current remaining capacity of the wearable power supply, the wearable power supply can send its current remaining capacity value to the terminal to display the remaining capacity value on a display of the terminal.

For example, when the wearable power supply is connected to a smart watch via an interface, the wearable power supply can send a percentage representing the remaining capacity of the battery of the wearable power supply to the smart watch in real time, thus the user can know the remaining battery capacity of the wearable power supply from the percentage displayed on the dial of the smart watch.

According to another embodiment, to notify the user of the current charge or discharge state of the wearable power supply, the method may further include a step that the wearable power supply lights up at least one LED power indication light for notification. In other embodiments, the LED power indication lights can be lit up when the wearable power supply is in the charged state.

In another embodiment, the method may further include a step of turning on a button selector switch, before the wearable power supply builds up an electrical connection with a terminal to be charged. Thus a more flexible charge and/or discharge control of the wearable power supply can be achieved. The method may continue to step 502.

In the next step 502, when the wearable power supply is charging the terminal, the remaining battery power value is adjusted in real time based on a battery discharging curve.

Though the wearable power supply can send the real time percentage representing the remaining capacity of the battery to the terminal, such as a smart watch, deviations would inevitably occur during the discharge process of the battery due to circuit design or manufacture, resulting in an inaccurate detection precision. In addition, when the wearable power supply itself detects its remaining capacity, the detection precision would also be affected.

To address the above issue, according to the power supply method of the current embodiment, the remaining battery capacity will be adjusted in real time based on the battery discharging curve.

Specifically, the wearable power supply may first control the initialization of a coulometer to measure the current discharge current, which is then passed through an analog-to-digital converter (ADC) to be converted to the corresponding voltage, which is then searched in the battery discharging curve for a corresponding energy consumption value. The energy consumption value acquired at each measurement-conversion-search period will be cumulated to determine the total energy consumption in the battery up to the current moment, and the percentage indicating the remaining battery capacity value would be adjusted synchronously in accordance with the total energy consumption calculated.

In the current embodiment, the detection period of the discharge current by the wearable power supply is 1 minute. To further enhance the displayed precision to enable the displayed remaining capacity value to change more smoothly, the detection period can also be shortened, for example, the discharge current can be detected every half a minute. However, the detection action will also consume the battery's energy, thus, for consideration of saving the battery's power, the detection period shouldn't be infinitely shortened. The method may proceed to step S503.

In the following step S503, the adjusted remaining battery capacity value is sent to the terminal, which thus displays the remaining batter capacity value.

According to another embodiment, when the remaining capacity of the battery of the wearable power supply is lower than a predetermined value, the terminal that is electrically connected to the wearable power supply can issue an alert, to notify the user of the current low battery status of the wearable power supply.

Distinguished from the prior art, in the power supply method of the wearable power supply according to the invention, the wearable power supply can boost the output voltage of the battery to the required rated voltage of the terminal electrically connected to the wearable power supply, thus the terminal can be charged via the connection interface connecting the wearable power supply and the terminal, eliminating the need of data cables. Furthermore, the overall size and cost of the wearable power supply can be further reduced, adding to the convenience of usage. In addition, the remaining battery capacity value can be adjusted in real time based on the battery discharging curve, and the adjusted remaining battery capacity value can be sent to be displayed on the terminal. Thus, the terminal can display the real time and accurate remaining capacity of the wearable power supply for the user's reference.

## Claims

1. A wearable power supply (101), comprising a control module (201, 301, 401), a battery (206, 306, 406); and a first charge module (202, 302, 402), a second charge module (203, 303, 403), a communication module (204, 304, 404), and a remaining capacity computation module (205, 305, 405), which are connected to the control module (201, 301, 401), wherein
the first charge module (202, 302, 402) comprises a driver (2021, 3021, 4021) and a first interface (2022, 3022, 4022), wherein the driver (2021, 3021, 4021) is connected to the control module (201, 301, 401), the first interface (2022, 3022, 4022), and the battery (206, 306, 406), respectively, and the first interface (2022, 3022, 4022) is configured to connect to an external energy source which charges the battery (206, 306, 406) through the first interface (2022, 3022, 4022);
the second charge module (203, 303, 403) comprises a voltage boost driver (2031, 3031, 4031) and a second interface (2032, 3032, 4032), wherein the voltage boost driver (2031, 3031, 4031) is connected to the control module (201, 301, 401), the battery (206, 306, 406), and the second interface (2032, 3032, 4032), respectively, the second interface (2032, 3032, 4032) is configured to electrically connect to a terminal through contact pins to charge the terminal, and the voltage boost driver (2031, 3031, 4031) is configured to step up an output voltage of the battery (206, 306, 406) to a required rated voltage of the terminal;
the remaining capacity computation module (205, 305, 405) is configured to adjust a remaining capacity value of the battery (206, 306, 406) in real time based on a discharging curve of the battery (206, 306, 406); and
the communication module (204, 304, 404) is configured to connect to the terminal through the contact pins and to send the adjusted remaining capacity value from the remaining capacity computation module (205, 305, 405) to the terminal to display;
**characterized in that**:
the terminal is a smart watch;
the wearable power supply (101) further comprises a magnet, and is stacked and secured onto a back of the terminal to form a whole via the attraction of the magnet and an enclosure of the terminal; and
the wearable power supply (101) is of a cylindrical shape, and a height of the wearable power supply (101) is smaller than 1mm.

2. The wearable power supply (101) according to claim 1, wherein the second interface (2032, 3032, 4032) is a USB, universal serial bus, interface comprising 5 metal contact pins.

3. The wearable power supply (101) according to any one of the foregoing claims, wherein the remaining capacity computation module (205, 305, 405) is configured to collect an instantaneous discharge current of the battery (206, 306, 406), search, in the battery discharging curve stored in the wearable power supply (101), for a corresponding remaining capacity value of the instantaneous discharge current, and adjust the remaining capacity value of the battery (206, 306, 406) in real time based on the searched remaining capacity value.

4. The wearable power supply (101) according to any one of the foregoing claims, further comprising a plurality of LED, light-emitting diode, power indication lights (307, 407) connected to the control module (301, 401), the LED power indication lights (307, 407) being configured to light up when the battery (306, 406) is charging the terminal or when the external energy source is charging the battery (306, 406).

5. The wearable power supply (101) according to any one of the foregoing claims, further comprising a button selector switch (408) connected to the control module (401) and configured to control charge and discharge of the battery (406).

6. The wearable power supply (101) according to any one of the foregoing claims, wherein the first interface (2022, 3022, 4022) is a micro universal serial bus, Micro USB.

7. The wearable power supply (101) according to any one of the foregoing claims, further comprising an enclosure of a heat-resistant and heat conductive material.

8. The wearable power supply (101) according to any one of the foregoing claims, wherein the battery (206, 306, 406) comprises a plurality of lithium polymer cells.

9. A power supply method executed by the wearable power supply (101) of any one of the foregoing claims, comprising:
boosting an output voltage of a battery of the wearable power supply to a required rated voltage of a terminal electrically connected to the wearable power supply, and charging the terminal via an interface connecting the wearable power supply and the terminal; (501)
adjusting a remaining capacity value of the battery in real time based on a discharging curve of the battery when the battery is charging the terminal; (502) and
sending the adjusted remaining capacity value to the terminal, to display the remaining capacity value of the battery on the terminal; (503)
wherein the terminal is a smart watch.

10. The power supply method according to claim 9, wherein the block of adjusting the remaining capacity value of the battery in real time (502) comprises:
initiating a coulometer to measure an instantaneous discharge current of the battery;
passing the instantaneous current through an analog-to-digital converter, ADC, to output a corresponding voltage; searching the corresponding voltage in a discharge curve of the battery, stored in the wearable power supply, for a corresponding energy consumption value; and
cumulating the energy consumption value acquired at each time to determine a total energy consumption value up to current moment, and calculating the remaining capacity value of the battery.

11. The power supply method according to claim 10, wherein a detection period of the discharge current by the wearable power supply is 1 minute.

12. The power supply method according to any one of claims 9-11 further comprising:
when the remaining capacity value of the battery is lower than a predetermined value, issuing, by the terminal, an alert to notify the user of the current lower battery status of the wearable power supply.

## Patentansprüche

1. Am Körper tragbare Stromversorgung (101) umfassend ein Steuermodul (201, 301, 401), eine Batterie (206, 306, 406); und ein erstes Lademodul (202, 302, 402), ein zweites Lademodul (203, 303, 403), ein Kommunikationsmodul (204, 304, 404), und ein Restkapazitätsberechnungsmodul (205, 305, 405), die mit dem Steuermodul (201, 301, 401) verbunden sind, wobei
das erste Lademodul (202, 302, 402) einen Treiber (2021, 3021, 4021) und eine erste Schnittstelle (2022, 3022, 4022) umfasst, wobei der Treiber (2021, 3021, 4021) jeweils mit dem Steuermodul (201, 301, 401), der ersten Schnittstelle (2022, 3022, 4022) und der Batterie (206, 306, 406) verbunden ist, und die erste Schnittstelle (2022, 3022, 4022) zum Anschluss an eine Energieaußenquelle konfiguriert ist, die die Batterie (206, 306, 406) über die erste Schnittstelle (2022, 3022, 4022) lädt;
das zweite Lademodul (203, 303, 403) einen Spannungsboosttreiber (2031, 3031, 4031) und eine zweite Schnittstelle (2032, 3032, 4032) umfasst, wobei der Spannungsboosttreiber (2031, 3031, 4031) jeweils mit dem Steuermodul (201, 301, 401), der Batterie ((206, 306, 406) und der zweiten Schnittstelle (2032, 3032, 4032) verbunden ist, die zweite Schnittstelle (2032, 3032, 4032) zum elektrischen Anschluss an ein Endgerät über Kontaktstifte konfiguriert ist, um das Endgerät zu laden, und der Spannungsboosttreiber (2031, 3031, 4031) zur Verstärkung einer Ausgangsspannung der Batterie (206, 306, 406) auf eine geforderte Nennspannung des Endgeräts konfiguriert ist;
das Restkapazitätsberechnungsmodul (205, 305, 405) zur Einstellung eines Restkapazitätswertes der Batterie (206, 306, 406) in Echtzeit auf Grund einer Entladekurve der Batterie (206, 306, 406); und
das Kommunikationsmodul (204, 304, 404) zum Anschluss an das Endgerät über Kontaktstifte und zum Senden des eingestellten Restkapazitätswertes aus dem Restkapazitätsberechnungsmodul (205, 305, 405) zum Endgerät zur Anzeige konfiguriert ist, **dadurch gekennzeichnet, dass**
das Endgerät eine smarte Uhr ist; die am Körper tragbare Stromversorgung (101) weiter einen Magnet umfasst, und auf einer Rückseite des Endgeräts zur Bildung eines Ganzes über die Anziehkraft des Magnets und eines Gehäuses gestapelt und befestigt ist; und die am Körper tragbare Stromversorgung (101) eine zylindrische Form aufweist, und eine Höhe der am Körper tragbaren Stromversorgung (101) kleiner als 1 mm ist.

2. Am Körper tragbare Stromversorgung (101) nach Anspruch 1, wobei die zweite Schnittstelle (2032, 3032, 4032) eine USB-Schnittstelle (Universal Serial Bus) ist, die 5 metallische Kontaktstifte umfasst.

3. Am Körper tragbare Stromversorgung (101) nach einem der vorhergehenden Ansprüche, wobei das Restkapazitätsberechnungsmodul (205, 305, 405) zur Sammlung eines Momentanentladestroms der Batterie (206, 306, 406), zur Suche, in der in der am Körper tragbare Stromversorgung (101) gespeicherten Batterieentladungskurve, eines entsprechenden Restkapazitätswertes des Momentanentladestroms, und zur Einstellung des Restkapazitätswertes der Batterie in Echtzeit auf Grund des gesuchten Restkapazitätswertes konfiguriert ist.

4. Am Körper tragbare Stromversorgung (101) nach einem der vorhergehenden Ansprüche, weiter umfassend eine Vielzahl von LED(Leuchtdioden)-Kontrolllampen (307,407), die mit dem Steuermodul (301, 401) verbunden sind, wobei die LED-Kontrolllampen (307,407) zum Aufleuchten konfiguriert sind, wenn die Batterie (306, 406) das Endgerät auflädt, oder wenn die Energieaußenquelle die Batterie (306, 406) auflädt.

5. Am Körper tragbare Stromversorgung (101) nach einem der vorhergehenden Ansprüche, weiter umfassend einen Knopfwahlschalter (408), der mit dem Steuermodul (401) verbunden ist und zur Steuerung der Ladung und Entladung der Batterie (406) konfiguriert ist.

6. Am Körper tragbare Stromversorgung (101) nach einem der vorhergehenden Ansprüche, wobei die erste Schnittstelle (2022, 3022, 4022) ein Micro-USB, Micro Universal Serial Bus ist.

7. Am Körper tragbare Stromversorgung (101) nach einem der vorhergehenden Ansprüche, die weiter ein Gehäuse aus wärmefestem und wärmeleitendem Material umfasst.

8. Am Körper tragbare Stromversorgung (101) nach einem der vorhergehenden Ansprüche, wobei die Batterie (206, 306, 406) eine Vielzahl von Lithium-Polymer-Zellen umfasst.

9. Stromversorgungsverfahren, das von der am Körper tragbaren Stromversorgung (101) nach einem der vorhergehenden Ansprüche durchgeführt wird und die folgenden Schritte umfasst:
Verstärken einer Ausgangsspannung einer Batterie der am Körper tragbaren Stromversorgung auf eine geforderte Nennspannung eines Endgeräts, das mit der am Körper tragbaren Stromversorgung elektrisch verbunden ist, und Laden des Endgeräts über eine Schnittstelle, die die am Körper tragbare Stromversorgung und das Endgerät verbindet; (501)
Einstellen eines Restkapazitätswertes der Batterie in Echtzeit auf Grund einer Entladekurve der Batterie, wenn die Batterie das Endgerät auflädt; (502) und
Senden des eingestellten Restkapazitätswertes zum Endgerät zur Anzeige des Restkapazitätswertes der Batterie auf dem Endgerät; (503)
wobei das Endgerät eine smarte Uhr ist.

10. Stromversorgungsverfahren nach Anspruch 9, wobei der Block des Einstellens des Restkapazitätswertes der Batterie in Echtzeit (502) umfasst:
Starten eines Coulometers zum Messen eines Momentanentladestroms der Batterie;
Durchleiten des Momentanentladestroms durch einen Analog-Digital-Wandler zur Ausgabe einer entsprechenden Spannung; Suchen in der entsprechenden Spannung, in einer in der am Körper tragbaren Stromversorgung (101) gespeicherten Batterieentladekurve, eines entsprechenden Energieverbrauchwertes; und
Kumulieren des Energieverbrauchwertes, der jeweils zur Bestimmung des Gesamtenergieverbrauchswertes bis zum aktuellen Zeitpunkt erfasst wurde, und Berechnen des Restkapazitätswertes der Batterie.

11. Stromversorgungsverfahren nach Anspruch 10, wobei ein Erkennungszeitraum des Entladestroms durch die am Körper tragbare Stromversorgung 1 Minute beträgt.

12. Stromversorgungsverfahren nach einem der Ansprüche 9 - 11, weiter umfassend:
wenn der Restkapazitätswert der Batterie niedriger als ein vorbestimmter Wert ist, Ausgeben, durch das Endgerät, einer Warnung zur Meldung der aktuellen niedrigeren Batterielage der am Körper tragbaren Stromversorgung an den Benutzer.

## Revendications

1. Alimentation électrique vestimentaire (101) comprenant un module de commande (201, 301, 401), une batterie (206,306, 406); et un premier module de charge (202, 302, 402), un deuxième module de charge (203, 303, 403), un module de communication (204, 304, 404), et un module de calcul de capacité restante (205, 305, 405), qui sont connectés au module de commande (201, 301, 401), où
le premier module de charge (202, 302, 402) comprend un pilote (2021, 3021, 4021) et une première interface (2022, 3022, 4022), le pilote (2021, 3021, 4021) étant connecté respectivement au module de commande (201, 301, 401), à la première interface (2022, 3022, 4022), et à la batterie (206,306, 406), et la première interface (2022, 3022, 4022) étant configurée pour se connecter à une source d'énergie extérieure qui charge la batterie (206,306, 406) par l'intermédiaire de la première interface (2022, 3022, 4022);
le deuxième module de charge (203, 303, 403) comprend un pilote d'appoint de tension (2031, 3031, 4031) et une deuxième interface (2032, 3032, 4032), le pilote d'appoint de tension (2031, 3031, 4031) étant connecté respectivement au module de commande (201, 301, 401), à la batterie (206, 306, 406), et à la deuxième interface (2032, 3032, 4032), la deuxième interface (2032, 3032, 4032) étant configurée pour se connecter électriquement à un terminal par l'intermédiaire de broches de contact afin de charger le terminal, et le pilote d'appoint de tension (2031, 3031, 4031) étant configuré pour accroître une tension de sortie de la batterie (206, 306, 406) à une tension nominale requise du terminal;
le module de calcul de capacité restante (205, 305, 405) est configuré pour régler une valeur de capacité restante de la batterie (206, 306, 406) en temps réel sur base d'une courbe de décharge de la batterie (206, 306, 406); et
le module de communication (204, 304, 404) est configuré pour se connecter électriquement au terminal par l'intermédiaire de broches de contact et pour émettre la valeur de capacité restante ajustée en provenance du module de calcul de capacité restante (205, 305, 405) vers le terminal pour affichage;
**caractérisée en ce que**:
le terminal est une montre intelligente;
l'alimentation électrique vestimentaire (101) comprend en outre un aimant, et est empilée et fixée à un dos du terminal afin de former un ensemble par l'attraction de l'aimant et un boitier du terminal; et
l'alimentation électrique vestimentaire (101) est d'une forme cylindrique, et une hauteur de l'alimentation électrique vestimentaire (101) est inférieure à 1 mm.

2. Alimentation électrique vestimentaire (101) selon la revendication 1, dans laquelle la deuxième interface (2032, 3032, 4032) est une interface USB, bus sériel universel, comprenant 5 broches métalliques de contact.

3. Alimentation électrique vestimentaire (101) selon l'une quelconque des revendications précédentes, dans laquelle le module de calcul de capacité restante (205, 305, 405) est configuré pour collecter un courant instantané de décharge de la batterie (206, 306, 406), pour rechercher dans la courbe de décharge de batterie stockée dans l'alimentation électrique vestimentaire (101) une valeur de capacité restante du courant instantané de décharge, et pour régler la valeur instantanée correspondante de capacité restante (206, 306, 406) en temps réel sur base de la valeur recherchée de capacité restante.

4. Alimentation électrique vestimentaire (101) selon l'une quelconque des revendications précédentes, laquelle comprend en outre une pluralité de LED, diodes électroluminescentes, de lampes LED indicatrices de puissance (307, 407) connectées au module de commande (301, 401), lampes LED indicatrices de puissance (307, 407) étant configurées pour s'allumer lorsque la batterie (306, 406) est en train de charger le terminal ou lorsque la source extérieure d'énergie est en train de charger la batterie (306, 406).

5. Alimentation électrique vestimentaire (101) selon l'une quelconque des revendications précédentes, laquelle comprend en outre un commutateur de sélection à bouton (408) connecté au module de commande (401) et configuré pour régler la charge et décharge de la batterie (406).

6. Alimentation électrique vestimentaire (101) selon l'une quelconque des revendications précédentes, dans laquelle la première interface (2022, 3022, 4022) est un Micro USB, microbus sériel universel.

7. Alimentation électrique vestimentaire (101) selon l'une quelconque des revendications précédentes, laquelle comprend en outre un boitier constitué d'un matériau résistant à la chaleur et conducteur de chaleur.

8. Alimentation électrique vestimentaire (101) selon l'une quelconque des revendications précédentes, dans laquelle la batterie (206, 306, 406) comprend une pluralité de cellules au lithium-polymère.

9. Procédé d'alimentation en énergie électrique réalisé par l'alimentation électrique vestimentaire selon l'une quelconque des revendications précédentes, comprenant:
accroître une tension de sortie d'une batterie de l'alimentation électrique vestimentaire à une tension nominale requise d'un terminal connecté électriquement à l'alimentation électrique vestimentaire, et charger le terminal par l'intermédiaire d'une interface connectant l'alimentation électrique vestimentaire et le terminal; (501)
régler une valeur de capacité restante de la batterie en temps réel sur base d'une courbe de décharge de la batterie, lorsque la batterie est en train de charger la terminal; (502) et
émettre la valeur de capacité restante ajustée vers le terminal pour afficher la valeur de capacité restante ajustée sur le terminal; (503)
dans lequel le terminal est une montre intelligente.

10. Procédé d'alimentation en énergie électrique selon la revendication 9, dans lequel le bloc de régler la valeur de capacité restante de la batterie en temps réel (502) comprend:
lancer un coulomètre afin de mesurer un courant de décharge instantané de la batterie;
faire passer le courant instantané à travers un convertisseur analogue-numérique, ADC, afin de sortir une tension correspondante;
rechercher dans la tension correspondante dans une courbe de décharge de la batterie stockée dans l'alimentation électrique vestimentaire une valeur correspondante de consommation d'énergie; et
accumuler la consommation d'énergie acquise à chaque fois afin de déterminer une valeur de consommation totale d'énergie jusqu'au moment en cours, et calculer la valeur de la capacité restante de la batterie.

11. Procédé d'alimentation en énergie électrique selon la revendication 10, dans lequel une période de détection du courant de décharge par l'alimentation électrique vestimentaire est d'1 minute.

12. Procédé d'alimentation en énergie électrique selon l'une quelconque des revendications 9 - 11, lequel comprend en outre:
lorsque la valeur de capacité restante de la batterie est inférieure à une valeur prédéterminée, émettre, par le terminal, une alerte afin d'avertir l'utilisateur de l'état inférieur courant de la batterie de l'alimentation électrique vestimentaire.
